# EUROPÄISCHE PATENTANMELDUNG

(11) **EP 3 591 627 A1**
(43) Veröffentlichungstag der Anmeldung: **08.01.2020**
(21) Anmeldenummer: 19174638.7
(22) Anmeldetag: 15.05.2019
(51) Int. Cl.: G07C 5/08, G01M 15/02, F01N 11/00

(54) **VERFAHREN ZUM EINSTELLEN EINER IUMPR EINES FAHRZEUGS, COMPUTERPROGRAMM, SPEICHERMITTEL, STEUERGERÄT UND FAHRZEUG**

(30) Priorität: 02.07.2018 DE 102018210857
(71) Anmelder: Volkswagen AG, 38440 Wolfsburg (DE)
(72) Erfinder: Schröder, Ulrich, 38104 Braunschweig (DE); Tomforde, Michael, 38518 Gifhorn (DE); Dierschke, Christian, 38690 Goslar (DE); Leineweber, Daniel, 38100 Braunschweig (DE); Forst, Johannes, 30455 Hannover (DE)

(57) **Zusammenfassung**

Die vorliegende Erfindung betrifft ein Verfahren zum Einstellen einer IUMPR eines Fahrzeugs (6), wobei die IUMPR einen Zähler zum Anzeigen einer Anzahl möglicher Abläufe von Diagnosefunktionen und einen Nenner zum Anzeigen einer Anzahl vordefinierter Betriebszustände, die im Fahrzeug (6) herrschten, umfasst, wobei anhand von physikalischen Betriebsparametern des Fahrzeugs (6) ermittelt wird, ob wenigstens eine Diagnosefunktion zur Ermittlung der Funktionsfähigkeit wenigstens einer Funktionskomponente (1) des Fahrzeugs (6) durchführbar ist und anschließend abhängig von aktuellen und/oder noch vorzunehmenden Betriebsabläufen im Fahrzeug (6) ermittelt wird, ob eine Diagnose-Betriebsart der wenigstens einen Funktionskomponente (1) zum Durchführen der wenigstens einen Diagnosefunktion verfügbar oder einstellbar ist, wobei der Zähler der IUMPR bei Erkennen, dass die Diagnose-Betriebsart verfügbar oder einstellbar ist, erhöht wird. Die Erfindung betrifft ferner ein Computerprogramm (2), ein Speichermittel, ein Steuergerät (3) sowie ein Fahrzeug (6).

## Beschreibung

Die vorliegende Erfindung betrifft ein Verfahren, ein Computerprogramm, ein Speichermittel, ein Steuergerät sowie ein Fahrzeug, mit welchen gesetzlichen Vorgaben hinsichtlich erforderlicher Diagnosefunktionen zum Einstellen von IUMPRs (In Use Motion Performance Ratios) eines Fahrzeugs Rechnung getragen werden kann.

In Steuergeräten von Verbrennungsmotoren wird aktuell eine Koordination von konkurrierenden Diagnosefunktionen bzw. Adaptionen umgesetzt. Unter konkurrierenden Diagnosefunktionen sind Funktionen zu verstehen, die sich beispielsweise aufgrund ihrer Systemeingriffe gegenseitig ausschließen und/oder beeinflussen, also konkurrierend sind. Mit Hilfe von Steuergeräten und/oder geeignet konfigurierter Computerprogramme werden derzeit die vom Gesetzgeber geforderten Diagnosefunktionen hinsichtlich ihrer Ausführbarkeit zentral koordiniert.

Neben der Durchführung der Diagnosefunktionen müssen auch die Häufigkeit, der Zyklus und die erfolgreiche Durchführung der Diagnosefunktionen protokolliert werden. Dies wird durch sogenannte Ratios bzw. die vorstehend erwähnten IUMPRs realisiert. Eine IUMPR weist einen Nenner und einen Zähler auf. Der Nenner steht für eine Anzahl von definierten Fahrzyklen und wird für alle Diagnosefunktionen gleichermaßen stets hochgezählt, wenn ein Fahrzyklus erkannt wird. Der Zähler basiert auf einer Anzahl von möglichen Abläufen einer Diagnosefunktion während eines Betriebs des Fahrzeugs und wird hochgezählt, wenn eine Diagnosefunktion mit einem Ergebnis durchgeführt wurde oder durchgeführt werden hätte können bzw. mittels der Diagnosefunktion ein Ergebnis hätte gefunden werden können.

Es gibt symmetrische Ratios und asymmetrische Ratios. Mittels symmetrischer Ratios lässt sich protokollieren, ob eine Diagnose bzw. eine Diagnosefunktion erfolgreich durchgeführt wurde. Diagnosefunktionen mit asymmetrischen Ratios bzw. einer entsprechenden Berechnung der Ratio benötigen im Fehlerfall eine längere Ausführungszeit als für eine Gutprüfung erforderlich wäre. Da die Ratio nur erhöht werden darf, wenn ein Fehler hätte gefunden werden können, muss nach der Gutprüfung, also bei einem erfolgreichen Durchlauf, für die Differenzzeit geprüft werden, ob ein Fehler hätte gefunden werden können. D.h., es wird eine Information über die Möglichkeit der Lauffähigkeit bzw. Durchführbarkeit einer Diagnosefunktion benötigt.

In aktuellen Systemen wird üblicherweise neben der physikalischen Laufbereitschaft einer Diagnosefunktion lediglich geprüft, ob die Diagnosefunktion durch Fehler gesperrt ist. So geht aus der deutschen Patentanmeldung DE 103 02 054 A1 ein Verfahren zum Betreiben eines Verbrennungsmotors hervor, bei welchem geprüft wird, ob vordefinierte Anforderungen zum Durchführen einer Diagnosefunktion vorliegen. Gemäß DE 103 02 054 A1 wird hierzu ein Verfahren zum Betreiben eines Verbrennungsmotors in einem Kraftfahrzeug vorgeschlagen, bei dem die Funktionsfähigkeit mindestens einer Funktionskomponente des Fahrzeugs von einer Diagnosefunktion geprüft wird, wobei die Diagnosefunktion eine Information, dass sie einen Fehler hätte finden können, in einem für alle Diagnosefunktionen einheitlichen Format an eine zentrale Funktion übermittelt, und dass die zentrale Funktion diese Information verarbeitet.

Systeme gemäß der DE 103 02 054 A1 werten jedoch nur die aktuell vorliegenden Zustände im Fahrzeug bzw. im Verbrennungsmotor aus. Weitere Einflüsse, die durch neue zentrale Betriebsartenkoordinationen hinzukommen, werden nicht betrachtet. Hierdurch kann jedoch eine Auswertung der Ratios beeinflusst werden und zu Fehlinterpretationen oder ungenauen Interpretationen führen. Mithin können Ratios unzulässiger- oder fälschlicherweise erhöht werden.

Aufgabe der vorliegenden Erfindung ist es, der voranstehend beschriebenen Problematik zumindest teilweise Rechnung zu tragen. Insbesondere ist es Aufgabe der vorliegenden Erfindung, ein Verfahren, ein Computerprogramm, ein Speichermittel, ein Steuergerät und ein Fahrzeug zu Verfügung zu stellen, mittels welcher ein verbessertes Einstellen eines oder mehrerer IUMPRs möglich ist.

Die voranstehende Aufgabe wird durch die Patentansprüche gelöst. Insbesondere wird die Aufgabe durch das Verfahren gemäß Anspruch 1, das Computerprogramm gemäß Anspruch 7, das Speichermittel gemäß Anspruch 8, das Steuergerät gemäß Anspruch 9 sowie das Fahrzeug gemäß Anspruch 10 gelöst. Weitere Vorteile der Erfindung ergeben sich aus den Unteransprüchen, der Beschreibung und den Figuren. Dabei gelten Merkmale, die im Zusammenhang mit dem Verfahren beschrieben sind, selbstverständlich auch im Zusammenhang mit dem erfindungsgemäßen Computerprogramm, dem erfindungsgemäßen Speichermittel, dem erfindungsgemäßen Steuergerät, dem erfindungsgemäßen Fahrzeug und jeweils umgekehrt, sodass bezüglich der Offenbarung zu den einzelnen Erfindungsaspekten stets wechselseitig Bezug genommen wird bzw. werden kann.

Gemäß einem ersten Aspekt der vorliegenden Erfindung wird ein Verfahren zum Einstellen eines IUMPRs eines Fahrzeugs bereitgestellt, wobei die IUMPR einen Zähler zum Anzeigen einer Anzahl möglicher Abläufe von Diagnosefunktionen und einen Nenner zum Anzeigen einer Anzahl vordefinierter Betriebszustände, die im Fahrzeug herrschten, umfasst. Im Rahmen des Verfahrens wird anhand von physikalischen Betriebsparametern des Fahrzeugs ermittelt, ob wenigstens eine Diagnosefunktion zur Ermittlung der Funktionsfähigkeit wenigstens einer Funktionskomponente des Fahrzeugs durchführbar ist. Anschließend wird abhängig von aktuellen und/oder noch vorzunehmenden Betriebsabläufen im Fahrzeug ermittelt, ob eine Diagnose-Betriebsart der wenigstens einen Funktionskomponente zum Durchführen der wenigstens einen Diagnosefunktion verfügbar oder einstellbar ist, wobei der Zähler der IUMPR erst bei Erkennen, dass die Diagnose-Betriebsart verfügbar oder einstellbar ist, erhöht wird.

Vorliegend wird erstmals vorgeschlagen, Informationen von einstellbaren Diagnose-Betriebsarten des Fahrzeugs zu berücksichtigen, beispielsweise einzuberechnen, um damit eine erfolgreiche Durchführung der wenigstens einen Diagnosefunktion sicherstellen zu können bzw. sicherstellen zu können, dass die wenigstens eine Diagnosefunktion auch tatsächlich hätte durchgeführt werden können oder mit Blick auf belastbare Ergebnisse zumindest empfehlenswert gewesen wäre.

Bei herkömmlichen Verfahren und Systemen wurde bisher lediglich geprüft, ob bestimmte Anforderungen, beispielsweise vorgegebene Betriebszustände im Fahrzeug, vorliegen, bei welchen eine Diagnosefunktion als solche theoretisch durchgeführt werden könnte. Nicht berücksichtigt wurde bislang, dass es bei bestimmten Betriebszuständen nicht möglich oder zumindest nicht empfehlenswert wäre, eine Diagnosefunktion auch tatsächlich durchzuführen, da sich während der Durchführung der Diagnosefunktion physikalische Wechselwirkungen im Fahrzeug ergeben könnten, welche die Messergebnisse derart beeinflussen, dass diese unbrauchbar wären. Demnach wird erfindungsgemäß sichergestellt, dass aktuelle und/oder noch vorzunehmende bzw. auftretende Betriebsabläufe bzw. Betriebszustände im Fahrzeug nicht zu konkurrierenden Diagnosefunktionen führen würden, also zu Diagnosefunktionen, die sich beispielsweise aufgrund ihres Systemeingriffs gegenseitig ausschließen oder zumindest störend beeinflussen.

Wenn beispielsweise ermittelt wird, dass das Fahrzeug stationär in einem vordefinierten Betriebspunkt fährt und der Verbrennungsmotor des Fahrzeugs eine vordefinierte Temperatur aufweist, könnte die wenigstens eine Diagnosefunktion theoretisch durchführbar sein. Wenn nun im nächsten Schritt allerdings ermittelt wird, dass für eine erfolgreiche Durchführung der wenigstens einen Diagnosefunktion eine vordefinierte Drehzahl des Verbrennungsmotors erforderlich ist, diese jedoch nicht eingestellt werden kann, da der Partikelfilter des Fahrzeugs gerade oder noch während der Durchführung der Diagnosefunktion bei einer anderen Drehzahl ausgebrannt bzw. regeneriert werden muss, wird ermittelt oder festgelegt, dass die erforderliche Diagnose-Betriebsart nicht verfügbar oder einstellbar ist. Entsprechend wird in diesem Fall der Zähler der IUMPR nicht erhöht.

Von Vorteil kann es sein, wenn konkurrierende Funktionen an einen Diagnosekoordinator zur Koordination von verschiedenen Diagnosefunktionen angebunden werden. Die Signalverbindung zwischen Diagnosekoordinator und Diagnosefunktionen besteht vorzugsweise in beide Richtungen, sodass die Diagnosefunktionen Bedarf zur Durchführung derselben an den Diagnosekoordinator melden können und der Diagnosekoordinator ggf. eine Freigabe, insbesondere nach geeigneter Koordination und etwaiger Priorisierung, an die jeweilige Diagnosefunktion zurückschicken kann.

Bei den Diagnosefunktionen kann zwischen aktiven und passiven Diagnosefunktionen unterschieden werden. Bei aktiven Diagnosefunktionen müssen definierte Betriebszustände, beispielsweise ein vordefinierter Motorzustand des Verbrennungsmotors des Fahrzeugs wie bestimmte Nockenwellen-Sollpositionen oder Einspritzarten, aktiv eingestellt werden, um korrekt funktionieren zu können bzw. um die gewünschten Ergebnisse erlangen zu können. Zu den aktiven Diagnosefunktionen zählen beispielsweise eine parallelisierte Katalysatordiagnose oder eine Mengengleichstellung. Unter der parallelisierten Katalysatordiagnose ist eine aktive Verbrennungsmotordiagnose zu verstehen, bei welcher Motorparameter verstellt werden, um eine gezielte Abweichung von einem Normalzustand zu erreichen und bei welcher zwei Systeme parallel bzw. gleichzeitig diagnostiziert werden, beispielsweise ein Katalysator und Lambda-Sonden des Fahrzeugs. Unter der Mengengleichstellung kann eine Erkennung von Bauteilabweichungen insbesondere über die Fahrzeug-Lebensdauer verstanden werden. Die Einspritzventile eines Verbrennungsmotors verhalten sich aufgrund von Fertigungstoleranzen und Abnutzung nicht gleich. D.h., bei einer vordefinierten Bestromungsdauer von verschiedenen Einspritzventilen werden durch diese jeweils unterschiedliche Mengen an Kraftstoff abgesetzt. Da die Kraftstoffmenge für jeden Zylinder und somit für jedes Ventil identisch sein soll, werden die Bauteilabweichungen ermittelt. Durch die Erkennung können die Abweichungen entsprechend kompensiert werden. Passive Diagnosefunktionen können den Motorzustand nicht aktiv beeinflussen, also beispielsweise keine Verstellung von Nockenwellenfunktionen bewirken. Passive Diagnosefunktionen sind jedoch ggf. nur in bestimmten Motorzuständen lauffähig.

Unter den physikalischen Betriebsparametern können eine Motordrehzahl, ein Motordrehmoment, eine Motortemperatur, eine Abgastemperatur, eine Fahrzeuggeschwindigkeit etc. verstanden werden. Grundsätzlich soll anhand der physikalischen Betriebsparameter des Fahrzeugs ermittelt werden, ob das Fahrzeug überhaupt in Betrieb ist, beispielsweise gefahren wird, und die wenigstens eine Diagnosefunktion überhaupt zumindest theoretisch mit Aussicht auf ein gewünschtes Diagnoseergebnis durchgeführt werden könnte.

Die Diagnose-Betriebsart kann einen oder mehrere unterschiedliche Betriebszustände umfassen. Unter einem vordefinierten Betriebszustand des Fahrzeugs ist ein Betriebszustand zu verstehen, in welchem das Fahrzeug beispielsweise mit einer vordefinierten Geschwindigkeit, einer vordefinierten Motortemperatur und einer entsprechenden Abgastemperatur fährt und bestimmte Fahrzeugbauteile aktiv sind oder nicht. Im Rahmen der Erfindung wird ermittelt, ob eine Diagnose-Betriebsart der wenigstens einen Funktionskomponente zum Durchführen der wenigstens einen Diagnosefunktion verfügbar oder einstellbar ist bzw. wäre. Dass die Diagnose-Betriebsart verfügbar oder einstellbar ist bzw. wäre, muss die Diagnose-Betriebsart wie vorstehend erläutert mit Aussicht auf ein gewünschtes oder entsprechend vordefiniertes Diagnoseergebnis verfügbar oder einstellbar sein. Unter der Durchführbarkeit der wenigstens einen Diagnosefunktion kann eine Lauffähigkeit der wenigstens einen Diagnosefunktion verstanden werden.

Die Auswertung der Ratios wird vorzugsweise basierend auf einer Betriebsarten- und Diagnosekoordination zentral durch die Motorsteuerung bzw. ein entsprechendes Steuergerät des Fahrzeugs durchgeführt. Unter dem Einstellen der IUMPR bzw. der Ratio kann das Berechnen wenigstens einer Ratio oder mehrerer Ratios verstanden werden. Unter der wenigstens einen Funktionskomponente können Fahrzeugbauteile wie Sensoren, Filter oder Katalysatoren, deren Funktion jeweils zu überprüfen ist, verstanden werden.

Zusätzlich oder alternativ zu der Ermittlung, welche Diagnosefunktion und/oder ob die wenigstens eine Diagnosefunktion durchführbar ist, kann ermittelt werden, welche Adaptionen oder andere Funktionen durchführbar sind. D.h., unter der wenigstens einen Diagnosefunktion können Funktionen wie Diagnosen, Adaptionen und dergleichen verstanden werden.

Gemäß einer weiteren Ausführungsform der vorliegenden Erfindung ist es möglich, dass bei einem Verfahren mehrere Diagnosefunktionen zueinander priorisiert werden und abhängig von den priorisierten Diagnosefunktionen ermittelt wird, ob eine Diagnose-Betriebsart der wenigstens einen Funktionskomponente zum Durchführen wenigstens einer Diagnosefunktion verfügbar oder einstellbar ist. Durch die Priorisierung kann gewährleistet werden, dass Diagnosefunktionen, die sich gegenseitig beeinflussen könnten, sei es durch Verfälschung von Messwerten oder weil beide Diagnosefunktionen auf die gleichen Steller zugreifen müssen, nicht parallel ausgeführt werden. Wenn beispielsweise zwei Diagnosefunktionen angefordert bzw. durchgeführt werden sollen, die nicht miteinander kompatibel sind, wird immer nur die Diagnosefunktion mit der höheren Priorität freigegeben. Dies kann durch ein entsprechend konfiguriertes Steuergerät des Fahrzeugs bzw. ein darin installiertes Computerprogramm automatisch durchgeführt werden.

Bei einem erfindungsgemäßen Verfahren kann es von Vorteil sein, wenn Informationen zum möglichen Durchführen der wenigstens einen Diagnosefunktion und/oder zur Verfügbarkeit und/oder Einstellbarkeit der Diagnose-Betriebsart aus einem Steuergerät des Fahrzeugs ausgelesen werden. Damit können alle für den Gesetzgeber benötigten Informationen an einer zentralen Stelle übersichtlich zur Verfügung gestellt und entsprechend einfach abgegriffen werden.

Außerdem ist es möglich, dass bei einem Verfahren gemäß der vorliegenden Erfindung eine Exklusionsmatrix zur Vorgabe, ob mehrere Diagnosefunktionen zumindest teilweise gleichzeitig ablaufen dürfen oder nicht, erstellt wird, wobei anhand der Exklusionsmatrix ermittelt wird, ob eine Diagnose-Betriebsart der wenigstens einen Funktionskomponente zum Durchführen der Diagnosefunktion verfügbar oder einstellbar ist. Die Exklusionsmatrix ist, wie vorzugsweise auch die vorstehend beschriebene Priorisierung, in einem Diagnosekoordinator abgelegt bzw. gespeichert. Zusammen mit der Priorisierung ist das Verfahren zur prioritätsbasierten Koordination von konkurrierenden Funktionen bzw. Diagnosefunktionen konfiguriert. Die Koordination bzw. ein entsprechender Diagnosekoordinator entscheidet, welche der konkurrierenden Diagnosefunktionen und/oder Adaptionen laufen bzw. durchgeführt werden dürfen. Wenn Freigabebedingungen für die wenigstens eine Diagnosefunktion erfüllt sind, teilt die wenigstens eine Diagnosefunktion ihren Laufwunsch dem Diagnosekoordinator mit. Dieser ist vorzugsweise mit einer zentralen Motorkoordination verbunden und erhält von dieser beispielsweise die Information, welche physikalischen Betriebsparameter, beispielsweise in Form eines Motorzustands, derzeit aktiv sind und welche Diagnose-Betriebsarten, beispielsweise in Form von Motorzuständen, eingestellt werden können. Für jede Diagnosefunktion ist im Diagnosekoordinator hinterlegt, bei welchen Diagnose-Betriebsarten und/oder bei welchen Betriebsparametern diese lauffähig ist. Bei Anforderung einer passiven Diagnosefunktion wird zunächst geprüft, ob diese mit den aktuellen Betriebsparametern und/oder mit der aktuellen Betriebsart lauffähig ist oder nicht. Für aktive Diagnosefunktionen kann geprüft werden, ob die gewünschte Diagnose-Betriebsart, beispielsweise in Form eines gewünschten und/oder kompatiblen Motorzustands, einstellbar ist. Nun ist es möglich, dass nur wenn eine solche Einstellung möglich ist, die wenigstens eine Diagnosefunktion an einer Priorisierung teilnehmen darf.

Zudem ist es bei einer weiteren Ausgestaltungsvariante der vorliegenden Erfindung möglich, dass anhand der priorisierten Diagnosefunktionen sowie der Exklusionsmatrix in absteigender Prioritätsreihenfolge geprüft wird, welche Diagnosefunktion mit der höchstpriorisierten Diagnosefunktion zumindest teilweise gleichzeitig durchführbar ist. D.h., es kann geprüft werden, welche sich anfordernden Diagnosefunktionen parallel zu der höchstpriorisierten Diagnosefunktion freigegeben werden können. Hierzu kann im Diagnosekoordinator hinterlegt sein, welche Diagnosefunktionen zusammen laufen dürfen bzw. können und welche nicht. Diese Prüfung erfolgt in absteigender Prioritätsreihenfolge. Es kann somit zunächst geprüft werden, ob die Diagnosefunktion mit der zweithöchsten Priorität zusammen mit der Diagnosefunktion mit der höchsten Priorität durchgeführt werden darf oder kann. Ist dies der Fall, erhalten die Diagnosefunktionen eine entsprechende Freigabe. Anschließend kann die Diagnosefunktion mit der dritthöchsten Priorität geprüft werden, ob diese mit den beiden zuvor freigegebenen Diagnosefunktionen kompatibel ist, usw. Für die Freigaben muss jede Diagnosefunktion jeweils mit allen höher priorisierten Diagnosefunktionen kompatibel sein.

Darüber hinaus ist es bei einer erfindungsgemäßen Ausführungsform möglich, dass bei einem Verfahren ein virtueller Laufwunsch der wenigstens einen Diagnosefunktion generiert wird, anhand von welchem ermittelt wird, ob eine Diagnose-Betriebsart der wenigstens einen Funktionskomponente zum Durchführen der wenigstens einen Diagnosefunktion verfügbar oder einstellbar ist. Zur Bestimmung der möglichen Lauffähigkeit im Falle einer Anforderung der wenigstens einen Diagnosefunktion erfolgt neben der Auswertung der aktuell aktiv angeforderten Diagnosefunktionen vorzugsweise eine weitere Auswertung, welche eine Auswertung der angefragten Diagnosefunktionen bevorzugt separat für jede angebundene asymmetrische Diagnosefunktion durchführt. Hierbei kann für jede Diagnosefunktion ausgewertet werden, ob die jeweilige Diagnosefunktion zu diesem Zeitpunkt ausgeführt werden könnte, wenn sie denn angefordert werden würde. Hierzu kann es von Vorteil sein, dass ein virtueller Laufwunsch generiert und an den Diagnosekoordinator übermittelt wird. Die so bestimmte Lauffähigkeit kann im Anschluss zur Berechnung der Ratio an die zugehörige Diagnosefunktion übermittelt werden. Dort kann sie mit einer Information zur physikalischen Laufbereitschaft verknüpft werden. Hierbei kann neben der Priorisierung im Diagnosekoordinator und der Betrachtung der Exklusionsmatrix auch die Betriebskoordination berücksichtigt werden. Dies kann zur Folge haben, dass eine Diagnosefunktion im Diagnosekoordinator zwar die höchste Priorität aufweist, durch die derzeit anliegende Betriebsart aber nicht eingestellt werden könnte oder sollte. In diesem Fall wird keine mögliche Lauffähigkeit gemeldet und der Zähler entsprechend auch nicht erhöht

Gemäß einem weiteren Aspekt der vorliegenden Erfindung wird ein Computerprogramm zur Verfügung gestellt, das Befehle umfasst, die bei der Ausführung des Computerprogramms durch einen Computer diesen veranlassen, das vorstehend im Detail erläuterte Verfahren auszuführen. Damit bringt das erfindungsgemäße Computerprogramm die gleichen Vorteile mit sich, wie sie ausführlich mit Bezug auf das erfindungsgemäße Verfahren beschrieben worden sind. Das Computerprogramm kann als computerlesbarer Anweisungscode in jeder geeigneten Programmiersprache wie beispielsweise in JAVA, C++ oder C# implementiert sein. Das Computerprogramm kann auf einem computerlesbaren Speichermedium wie einer Datendisk, einem Wechsellaufwerk, einem flüchtigen oder nichtflüchtigen Speicher oder einem eingebauten Speicher/Prozessor abgespeichert sein. Das Computerprogramm kann einen Computer oder andere programmierbare Geräte wie ein Steuergerät derart programmieren, dass die gewünschten Funktionen ausgeführt werden. Ferner kann das Computerprogramm in einem Netzwerk, wie beispielsweise dem Internet, bereitgestellt werden bzw. sein, von dem es bei Bedarf von einem Nutzer heruntergeladen werden kann. Das Computerprogramm kann sowohl mittels einer Software als auch mittels einer oder mehrerer spezieller elektronischer Schaltungen und/oder in Form eines Computerprogrammprodukts, d.h. in Hardware, oder in beliebig hybrider Form, d.h. mittels Software-Komponenten und Hardware-Komponenten, realisiert werden bzw. sein.

Zudem wird ein Speichermittel mit einem darauf gespeicherten Computerprogramm, das zum Durchführen eines wie vorstehend beschriebenen Verfahrens konfiguriert und ausgestaltet ist, zur Verfügung gestellt. Das Speichermittel kann in Form eines computerlesbaren Speichermediums wie einer Datendisk, einem Wechsellaufwerk, einem flüchtigen oder nichtflüchtigen Speicher ausgestaltet sein. Außerdem wird ein Steuergerät, insbesondere ein Fahrzeugsteuergerät, mit einem darauf installierten, wie vorstehend beschriebenen Computerprogramm, das zum Durchführen eines wie vorstehend beschriebenen Verfahrens konfiguriert und ausgestaltet ist, bereitgestellt. Damit bringen das erfindungsgemäße Speichermittel und das erfindungsgemäße Steuergerät ebenso die vorstehend beschriebenen Vorteile mit sich.

Gemäß einem weiteren Aspekt der vorliegenden Erfindung wird ein Fahrzeug, insbesondere ein Fahrzeug mit einem Verbrennungsmotor, mit einem wie vorstehend beschriebenen Steuergerät zum Einstellen einer IUMPR des Fahrzeugs zur Verfügung gestellt. Damit bringt auch das Fahrzeug die obenstehend beschriebenen Vorteile mit sich. Das Fahrzeug ist vorzugsweise in Form eines Kraftfahrzeugs, insbesondere als PKW oder LKW, ausgestaltet. Gleichwohl kann das Fahrzeug auch als Schienenfahrzeug, Luftfahrzeug, Wasserfahrzeug oder als Roboter ausgestaltet sein.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Es zeigen jeweils schematisch:
- Figur 1: ein Flussdiagramm zum Erläutern eines Verfahrens gemäß einer Ausführungsform der vorliegenden Erfindung, und
- Figur 2: ein Fahrzeug mit einem Steuergerat und einem darauf installierten Computerprogramm zum Ausführen des in Fig. 1 dargestellten Verfahrens.

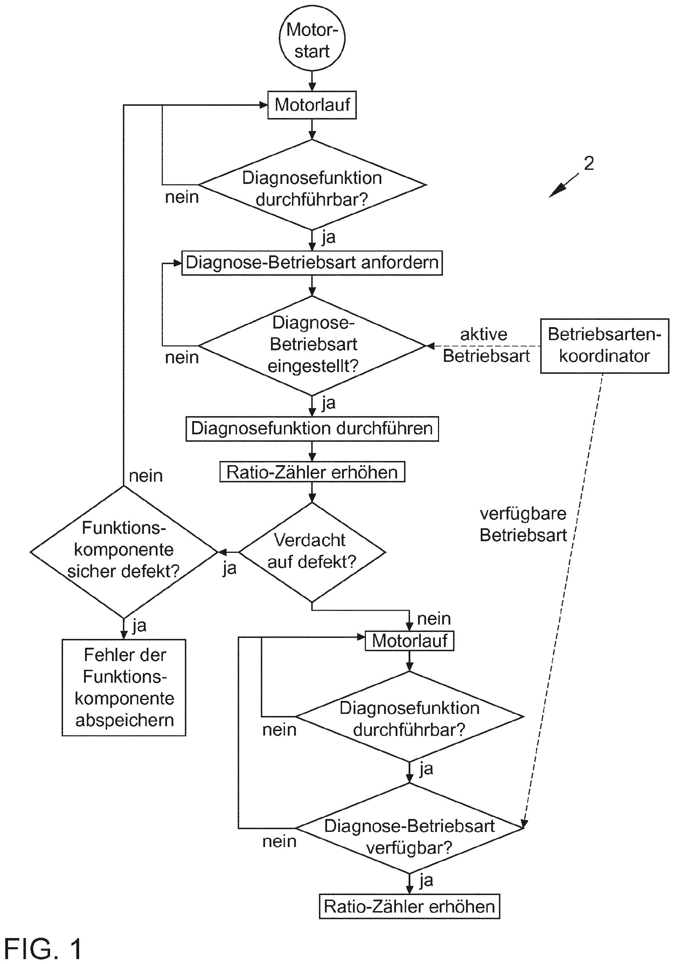

Fig. 1 zeigt ein Flussdiagramm zum Erläutern eines Verfahrens bzw. der Konfiguration eines Computerprogramms 2 zum Einstellen einer IUMPR bzw. Ratio eines Fahrzeugs 6 gemäß einer bevorzugten Ausführungsform. Das Flussdiagramm ist unter der Annahme zu betrachten, dass eine Diagnosefunktion einen Durchlauf benötigt, um zu erkennen, dass die Funktionskomponente 1 in Ordnung ist und mehrere Durchläufe benötigt, um zu erkennen, dass die Funktionskomponente 1 defekt ist.

Wie in Fig. 1 dargestellt, findet zunächst ein Motorstart eines Verbrennungsmotors 4 des Fahrzeugs 6 statt. Dies wird durch das Computerprogramm 2 entsprechend erkannt. Anschließend wird anhand von physikalischen Betriebsparametern des Fahrzeugs 6 wie einer Drehzahl, einer Last, einer Motortemperatur und/oder einer Abgastemperatur ermittelt, ob eine Diagnosefunktion zur Ermittlung der Funktionsfähigkeit einer Funktionskomponente 1 des Fahrzeugs 6 durchführbar bzw. lauffähig ist. Unter der Funktionskomponente 1 kann im vorliegenden Beispiel ein Katalysator des Fahrzeugs 6 verstanden werden. Wird festgestellt, dass die Diagnosefunktion nicht durchführbar ist, schreitet das Verfahren zum vorherigen Schritt zurück. Wird festgestellt, dass die Diagnosefunktion durchführbar ist, wird eine Diagnose-Betriebsart angefordert, bei welcher die Diagnosefunktion durchführbar ist. Dies wird so lange durchgeführt, bis die gewünschte Diagnose-Betriebsart eingestellt ist. Mittels eines Betriebsartenkoordinators können hierbei verschiedene aktive und/oder verfügbare Betriebsarten koordiniert bzw. eingestellt werden. Sobald die gewünschte Diagnose-Betriebsart eingestellt ist, kann die zugehörige Diagnosefunktion durchgeführt werden. Danach wird der Zähler der Ratio erhöht.

Nun folgt eine Überprüfung auf einen möglichen Defekt. Bei einem ersten Verdacht auf einen Defekt schreitet das Verfahren zu einer genaueren Fehlerüberprüfung voran. Gibt es dort keine ausreichenden Gründe, die für einen Defekt der Funktionskomponente 1 sprechen, springt das Verfahren wieder an den Anfang zurück und der Prüfvorgang beginnt von vorne. Gibt es ausreichend Gründe, die für einen Defekt der Funktionskomponente 1 sprechen, wird der Defekt bzw. ein entsprechender Fehler der Funktionskomponente 1 gespeichert. Gibt es von Beginn an keinen Anhaltspunkt für einen Defekt der Funktionskomponente 1, beginnt das Verfahren wieder mit der Erkennung des Motorlaufs und der Überprüfung, ob die Diagnosefunktion lauffähig ist. Ist dies der Fall, war es bei herkömmlichen Verfahren üblich, anschließend den Ratio-Zähler zu erhöhen. Vorliegend wird nun jedoch noch bzw. wieder abhängig von aktuellen und/oder noch vorzunehmenden Betriebsabläufen im Fahrzeug 6 ermittelt, ob überhaupt eine Diagnose-Betriebsart der Funktionskomponente 1 zum Durchführen der Diagnosefunktion tatsächlich verfügbar oder einstellbar ist. Erst wenn dies der Fall ist, wird der Zähler der Ratio erhöht.

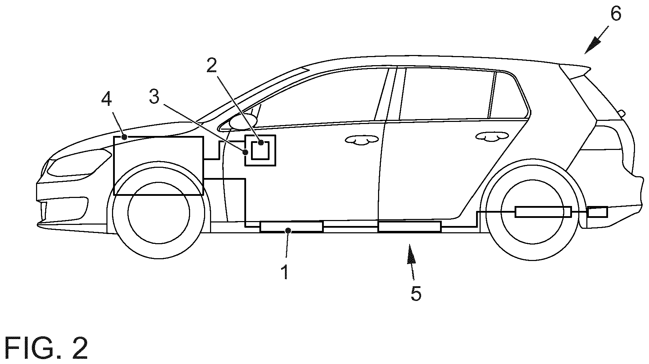

Fig. 2 zeigt ein Fahrzeug 6 mit einem Steuergerät 3 und einem darin installierten Computerprogramm 2 zum Einstellen einer IUMPR des Fahrzeugs 6 bzw. zum Durchführen des mit Bezug auf Fig. 1 beschriebenen Verfahrens. Das Fahrzeug 6 weist einen Verbrennungsmotor 4 und eine daran angeschlossene Abgasanlage 5 mit dem obenstehend beispielhaft erwähnten Katalysator bzw. der Funktionskomponente 1 auf.

Die Erfindung lässt neben den dargestellten Ausführungsformen weitere Gestaltungsgrundsätze zu. D.h., die Erfindung soll nicht auf die mit Bezug auf die Figuren erläuterten Ausführungsbeispiele beschränkt betrachtet werden.

So ist es im Rahmen des Verfahrens möglich, dass mehrere Diagnosefunktionen zueinander priorisiert werden und abhängig von den priorisierten Diagnosefunktionen ermittelt wird, ob eine Diagnose-Betriebsart der Funktionskomponente 1 zum Durchführen einer Diagnosefunktion verfügbar oder einstellbar ist. Ferner ist es möglich, dass Informationen zum möglichen Durchführen der Diagnosefunktion und/oder zur Verfügbarkeit und/oder Einstellbarkeit der Diagnose-Betriebsart aus dem Steuergerät 3 des Fahrzeugs 6 ausgelesen werden. Von Vorteil ist es, wenn eine Exklusionsmatrix zur Vorgabe, ob mehrere Diagnosefunktionen zumindest teilweise gleichzeitig ablaufen dürfen oder nicht, erstellt wird, wobei anhand der Exklusionsmatrix ermittelt wird, ob eine Diagnose-Betriebsart der Funktionskomponente 1 zum Durchführen der Diagnosefunktion verfügbar oder einstellbar ist. Gemäß einer besonders bevorzugten Ausführungsform wird anhand der priorisierten Diagnosefunktionen sowie der Exklusionsmatrix in absteigender Prioritätsreihenfolge geprüft, welche Diagnosefunktion mit der höchstpriorisierten Diagnosefunktion zumindest teilweise gleichzeitig durchführbar ist. Darüber hinaus ist es möglich, dass ein virtueller Laufwunsch der Diagnosefunktion generiert wird, anhand von welchem ermittelt wird, ob eine Diagnose-Betriebsart der Funktionskomponente 1 zum Durchführen der Diagnosefunktion verfügbar oder einstellbar ist.

Gemäß dem gezeigten Verfahren erfolgt eine Berechnung der möglichen Durchführbarkeit einer Diagnosefunktion mit einer zentralen Auswertung möglicher Anforderungen an die Diagnosefunktion. Die Entscheidung, welche Diagnosefunktion laufen darf bzw. ob überhaupt eine Diagnosefunktion laufen darf, erfolgt insbesondere anhand der Exklusionsmatrix und prioritätsbasiert. Diese Koordination ist weiterhin an die zentrale Motorkoordination angebunden und kann hierüber auswerten, ob spezielle Fahrzeug- und/oder Motorbetriebszustände, sofern erforderlich, angefordert werden könnten. Hierdurch kann beispielsweise sichergestellt werden, dass eine asymmetrische Ratio zur Durchführbarkeit einer Diagnosefunktion korrekt berechnet werden kann. Hierbei ist zu erwähnen, dass die vorliegende Erfindung insbesondere das Einstellen asymmetrischer Ratios betrifft und das vorliegende Verfahren entsprechend bevorzugt zum Einstellen einer asymmetrischen IUMPR konfiguriert ist.

Die Koordination kann die an sie gestellten Anforderungen und eine potentielle Anforderung einer Diagnosefunktion gegeneinander priorisieren und entscheidet auf diese Weise, ob die Diagnosefunktion potentiell, also im Falle einer Anforderung, zu diesem Zeitpunkt die höchste Priorität innehält und somit eingestellt werden könnte. Bei dieser Betrachtung kann neben der Priorisierung und der Exklusionsmatrix im Diagnosekoordinator auch die Priorisierung in einer Betriebskoordination in die Berechnung einer möglichen Durchführbarkeit miteinbezogen werden.

### Bezugszeichenliste

- 1: Funktionskomponente
- 2: Computerprogramm
- 3: Steuergerät
- 4: Verbrennungsmotor
- 5: Auspuffanlage

- 6: Fahrzeug

## Patentansprüche

1. Verfahren zum Einstellen einer IUMPR eines Fahrzeugs (6), wobei die IUMPR einen Zähler zum Anzeigen einer Anzahl möglicher Abläufe von Diagnosefunktionen und einen Nenner zum Anzeigen einer Anzahl vordefinierter Betriebszustände, die im Fahrzeug (6) herrschten, umfasst, **dadurch gekennzeichnet, dass** anhand von physikalischen Betriebsparametern des Fahrzeugs (6) ermittelt wird, ob wenigstens eine Diagnosefunktion zur Ermittlung der Funktionsfähigkeit wenigstens einer Funktionskomponente (1) des Fahrzeugs (6) durchführbar ist und anschließend abhängig von aktuellen und/oder noch vorzunehmenden Betriebsabläufen im Fahrzeug (6) ermittelt wird, ob eine Diagnose-Betriebsart der wenigstens einen Funktionskomponente (1) zum Durchführen der wenigstens einen Diagnosefunktion verfügbar oder einstellbar ist, wobei der Zähler der IUMPR bei Erkennen, dass die Diagnose-Betriebsart verfügbar oder einstellbar ist, erhöht wird.

2. Verfahren nach Anspruch 1,
**dadurch gekennzeichnet,**
**dass** mehrere Diagnosefunktionen zueinander priorisiert werden und abhängig von den priorisierten Diagnosefunktionen ermittelt wird, ob eine Diagnose-Betriebsart der wenigstens einen Funktionskomponente (1) zum Durchführen wenigstens einer Diagnosefunktion verfügbar oder einstellbar ist.

3. Verfahren nach einem der voranstehenden Ansprüche,
**dadurch gekennzeichnet,**
**dass** Informationen zum möglichen Durchführen der wenigstens einen Diagnosefunktion und/oder zur Verfügbarkeit und/oder Einstellbarkeit der Diagnose-Betriebsart aus einem Steuergerät (3) des Fahrzeugs (6) ausgelesen werden.

4. Verfahren nach einem der voranstehenden Ansprüche,
**dadurch gekennzeichnet,**
**dass** eine Exklusionsmatrix zur Vorgabe, ob mehrere Diagnosefunktionen zumindest teilweise gleichzeitig ablaufen dürfen oder nicht, erstellt wird, wobei anhand der Exklusionsmatrix ermittelt wird, ob eine Diagnose-Betriebsart der wenigstens einen Funktionskomponente (1) zum Durchführen der Diagnosefunktion verfügbar oder einstellbar ist.

5. Verfahren nach Anspruch 4,
**dadurch gekennzeichnet,**
**dass** anhand der priorisierten Diagnosefunktionen sowie der Exklusionsmatrix in absteigender Prioritätsreihenfolge geprüft wird, welche Diagnosefunktion mit der höchstpriorisierten Diagnosefunktion zumindest teilweise gleichzeitig durchführbar ist.

6. Verfahren nach einem der voranstehenden Ansprüche,
**dadurch gekennzeichnet,**
**dass** ein virtueller Laufwunsch der wenigstens einen Diagnosefunktion generiert wird, anhand von welchem ermittelt wird, ob eine Diagnose-Betriebsart der wenigstens einen Funktionskomponente (1) zum Durchführen der wenigstens einen Diagnosefunktion verfügbar oder einstellbar ist.

7. Computerprogramm (2), umfassend Befehle, die bei der Ausführung des Computerprogramms (2) durch einen Computer diesen veranlassen, das Verfahren nach einem der Ansprüche 1 bis 6 auszuführen.

8. Speichermittel mit einem darauf gespeicherten Computerprogramm (2), das zum Durchführen eines Verfahrens nach einem der Ansprüche 1 bis 6 konfiguriert und ausgestaltet ist.

9. Steuergerät (3) mit einem darauf installierten Computerprogramm (2) nach Anspruch 7, das zum Durchführen eines Verfahrens nach einem der Ansprüche 1 bis 6 konfiguriert und ausgestaltet ist.

10. Fahrzeug (6) mit einem Steuergerät (3) nach Anspruch 9 zum Einstellen einer IUMPR des Fahrzeugs (6).
